# EUROPÄISCHE PATENTANMELDUNG

(11) **EP 3 081 188 A1**
(43) Veröffentlichungstag der Anmeldung: **19.10.2016**
(21) Anmeldenummer: 15163640.4
(22) Anmeldetag: 15.04.2015
(51) Int. Cl.: A61C 15/04

(54) **VORRICHTUNG ZUR REINIGUNG VON ZAHNZWISCHENRÄUMEN**

(71) Anmelder: Schröder, Ludger, 57462 Olpe (DE); Martin, Tobias, 57462 Olpe (DE)
(72) Erfinder: Schröder, Ludger, 57462 Olpe (DE); Martin, Tobias, 57462 Olpe (DE)
(74) Vertreter: Patentanwälte Dörner & Kötter PartG mbB

(57) **Zusammenfassung**

Die Erfindung betrifft eine Vorrichtung zur Reinigung von Zahnzwischenräumen, umfassend ein Gehäuse zur Aufnahme eines Zahnseidespenders, zwei zangenartig zueinander ausgebildete Führungsarme, die einen Zwischenraum begrenzen, durch welchen die Zahnseide des Zahnseidespenders transportierbar ist sowie ein Fördermodul, mittels dessen die Zahnseide durch einen geberseitigen Führungsarm in Richtung des gegenüberliegend angeordneten nehmerseitigen Führungsarm förderbar ist. In dem nehmerseitigen Führungsarm sind Greifmittel zur Entgegennahme und Fixierung der Zahnseide angeordnet, die ein eine Durchgangsbohrung (351) aufweisendes, zumindest bereichsweise elastisches Spannteil (35) umfassen, das innerhalb einer unterschiedliche Innendurchmesser aufweisenden Klemmbohrung (33) eines Klemmstücks (3) verschiebbar angeordnet ist, durch welche Klemmbohrung (33) die Zahnseide (71) förderbar ist. Innerhalb der Durchgangsbohrung (351) des Spannteils (35) sind eine Anzahl von in Richtung der vertikalen Mittelachse der Durchgangsbohrung (351) gerichteter Klemmarme angeordnet.

## Beschreibung

Die Erfindung betrifft eine Vorrichtung zur Reinigung von Zahnzwischenräumen nach dem Oberbegriff des Patentanspruchs 1. Die Erfindung betrifft weiterhin eine Zahnseide zum Einsatz in einer solchen Vorrichtung nach dem Patentanspruch 13.

Es ist allgemein bekannt, dass konventionelles Putzen der Zähne mittels Zahnbürste zur Entfernung aller eingeschlossenen Speisereste sowie des Zahnbelags unzureichend ist. Zur Ergänzung des Reinigungsvorgangs ist der Einsatz von Zahnseiden oder auch Zahnzwischenraumbürsten empfohlen worden. Die Entfernung von Zahnbelag sowie eingeschlossenen Speiseresten beugt Karies, Parodontitis und Parodontoseerkrankungen vor, verbessert die allgemeine Mundhygiene und verhindert die Entstehung von Mundgeruch.

Zur vereinfachten Handhabung der Zahnseide wurden sogenannte "Flosser" entwickelt. Dieser Begriff "Flosser" ist angelehnt an die englischen Wörter "floss" für Zahnseide bzw. "flossing" für Zahnreinigung mit Zahnseide. Ein Flosser weist in der Regel ein Handstück mit einer daran angeordneten Gabel auf, über deren freie Enden ein Zahnseidefaden geführt ist. Die Zahnseide wird mittels des Flossers in die Zahnzwischenräume eingeführt, um die schwer zugänglichen Zahnflächen in diesen Interdentalbereichen durch Hin- und Herbewegung des Zahnseidefadens zu reinigen. Es sind auch motorbetriebene Flosser bekannt, bei denen der Zahnseidefaden zwischen einer Vorratsspule und einer Aufwickelspule in Form einer Vorschubbewegung angetrieben wird, so dass die Zahnseide zwischen den freien Ende der Flossergabel bewegt wird, wobei der Zahnseidefaden zwischen den freien Enden der Flossergabel immer gespannt bleibt. Durch Ausgestaltung der Führung der Zahnseide zwischen unterschiedlichen Spulen kann der Zahnseidefaden dabei in eine vibratorische Bewegung in Form einer Längsschwingung versetzt werden.

Nachteilig an den Flossern der vorbekannten Art ist, dass die zwischen dem freien Ende der Flossergabel gespannte Zahnseide beispielsweise auf Grund von Konkrementen und Speiseresten nur schwer oder gar nicht in die interdentalen oder interimplantären Zwischenräume geführt werden kann. Weiterhin besteht beim Einführen der gespannten Zahnseide in verengte Zahnzwischenräume die Gefahr einer Verletzung des Zahnfleisches, da die Zahnseide mit hohem Druck in die Zahnzwischenräume gepresst werden muss. In diesem Zusammenhang ist festzustellen, dass die Verengung zwischen zwei Zähnen regelmäßig zahnkronenseitig auftritt, wobei der Zahnzwischenraum zahnfleischseitig erweitert ist.

Aus der DE 20 2007 016 208 B1 ist eine Vorrichtung zur Reinigung von Zahnzwischenräumen bekannt, die eine Einführung der Zahnseide in die Zahnzwischenräume sowie eine Reinigung dieser Zahnzwischenräume ermöglicht. Diese vorbekannte Vorrichtung erfüllt grundsätzlich die an sie gestellte Aufgabe. Es hat sich jedoch gezeigt, dass die vorgeschlagene Lösung in Bezug auf das Handling der Zahnseide, insbesondere hinsichtlich Durchführung durch den Zahnzwischenraum und deren nachfolgende Aufnahme aufwendig darstellt.

Hier setzt die vorliegende Erfindung an. Der Erfindung liegt die Aufgabe zugrunde, eine Vorrichtung zur Reinigung von Zahnzwischenräumen bereitzustellen, die aufwandminimiert herstellbar ist und bei der das Handling der Zahnseide verbessert ist. Gemäß der Erfindung wird diese Aufgabe durch die Merkmale des kennzeichnenden Teils des Patenanspruchs 1 gelöst.

Mit der Erfindung ist eine Vorrichtung zur Reinigung von Zahnzwischenräumen geschaffen, die aufwandminimiert herstellbar ist und bei der das Handling der Zahnseide verbessert ist. Durch das Vorsehen eines eine Durchgangsbohrung aufweisenden, zumindest bereichsweise elastischen Spannteils, das innerhalb einer unterschiedliche Innendurchmesser aufweisenden Klemmbohrung eines Klemmstücks verschiebbar angeordnet ist, durch welche Klemmbohrung die Zahnseide förderbar ist, wobei innerhalb der Durchgangsbohrung des Spannteils eine Anzahl von in Richtung der vertikalen Mittelachse der Durchgangsbohrung gerichteter Klemmarme angeordnet sind, ist eine einfache und sogleich zuverlässige mechanische Aufnahme und Freigabe der Zahnseide ermöglicht. Die Aufnahme der Zahnseide erfolgt hierbei durch Durchführung durch die zuvor vergrößerte Durchgangsbohrung des Spannteils mit nachfolgender elastischer Verbringung in den verkleinerten Ausgangszustand, wodurch die Zahnseide in dem Spannteil eingeklemmt ist. Die Vergrößerung bzw. Verkleinerung der Durchgangsbohrung des Spannteils ist durch die unterschiedlichen Innendurchmesser der Klemmbohrung des Klemmstücks, in dem das Spannteil verschiebbar ist. Durch die Klemmarme ist eine Verbesserung der Fixierung der Zahnseide in der Durchgangsbohrung des Spannteils bewirkt.

Unter dem Begriff "Zahnseide" sind nachfolgend auch Abwandlungen flexibler Endlosinterdentalreinigungshilfsmittel wie beispielsweise flexible Endlosinterdentalbürsten zu subsumieren.

In Weiterbildung der Erfindung ist die Klemmbohrung in Richtung des geberseitigen Führungsarms konisch zulaufend ausgebildet. Hierdurch ist eine kontinuierliche Komprimierung des Spannteils und damit der Durchgangsbohrung des Spannteils bei Verschiebung entlang der Klemmbohrung erzielt.

In Ausgestaltung der Erfindung sind die Klemmarme zumindest teilweise diametral gegenüberliegend der vertikalen Mittelachse der Durchgangsbohrung des Spannteils angeordnet. Hierdurch ist die Haltewirkung weiter verbessert.

In weiterer Ausgestaltung der Erfindung sind die Klemmarme durch winkling angestellte Borsten gebildet, die bevorzugt in einem spitzen Winkel dem geberseitigen Führungsarm entgegen gerichtet an der Innenmantelfläche der Durchgangsbohrung angestellt sind. Hierdurch ist eine kostengünstige Realisierung von Klemmarmen mit guten Halteeigenschaften erzielt.

In alternativer Ausgestaltung der Erfindung sind die Klemmarme durch dem geberseitigen Führungsarm entgegengerichtet in einem spitzen Winkel angestellte Schuppen einer an der Innenmantelfläche der Durchgangsbohrung angeformten Schuppenstruktur gebildet. Eine derartige Schuppenkontur ist einfach in die Oberfläche der Innenmantelfläche einzuformen, insbesondere bei Realisierung des Spannteils als Kunststoff- oder Gummiformteil. Dabei ist die Schuppenkontur bevorzugt derart ausgebildet, dass ein Widerhakeneffekt bei Relativbewegung der in der Durchgangsbohrung befindlichen Zahnseide in Richtung des geberseitigen Führungsarms, also in Spannrichtung, eintritt. Entgegen der Spannrichtung ist dabei eine einfache Entnahme eines Zahnseideabschnitts nach dessen Abtrennung ermöglicht, da in dieser Richtung der Widerhakeneffekt nicht eintritt und die Zahnseide entlang der Schuppen des Schuppenprofils gleiten kann.

Der Begriff "Schuppenstruktur" ist vorliegend weit gefasst zu verstehen. Hierunter sind auch solche Oberflächenstrukturen zu subsumieren, die beispielsweise wendelförmig oder ringförmig ausgebildet sind. Wesentlich ist hier die Möglichkeit einer "Verkrallung" der Oberflächen der Klemmarme mit der Zahnseidenoberfläche.

In Weiterbildung der Erfindung weist die Klemmbohrung an wenigstens einem Ende, bevorzugt an beiden Enden einen Anschlag für das Spannteil auf. Hierdurch ist ein Herausgleiten des verschiebbar gelagerten Spannteils aus der Klemmbohrung des Klemmstücks verhindert.

In Ausgestaltung der Erfindung ist das Spannteil mit wenigstens einem Federelement verbunden, durch welches das Spannteil in Richtung des geringsten Innendurchmessers der Klemmbohrung gegen einen endseitig der Klemmbohrung angeordneten Anschlag vorgespannt ist. Hierdurch ist eine maximale Komprimierung des Spannteils und somit eine maximale Haltewirkung erzielt.

In weiterer Ausgestaltung der Erfindung ist beidseitig des Klemmstücks wenigstens ein Federelement angeordnet, wobei die Federelemente derart ausgebildet sind, dass sich das Klemmstück in Ruhestellung etwa mittig des nehmerseitigen Führungsarms befindet. Durch eine derartige federnde Anordnung des Klemmstücks, welches das die Zahnseide fixierende Spannteil aufnimmt, ist eine longitudinale Schwingung der Zahnseide durch Aufbringen lediglich einer gepulsten Zugkraft auf das Klemmstück ermöglicht. Nach Einwirkung des jeweiligen Zugimpulses auf das Klemmstück wird dieses durch die Vorspannkraft der Federelemente in Schwingung versetzt, welche durch die nachfolgenden Zugimpulse immer wieder aufs Neue angeregt wird. Durch eine solche longitudinale Schwingung der Zahnseide ist eine gute Reinigungswirkung erzielbar. Bevorzugt ist wenigstens ein Federelement durch eine Schraubenfeder gebildet.

In Weiterbildung der Erfindung ist das Klemmstück entlang einer Führungsschiene verfahrbar, die durch einen in dem Klemmstück eingebrachten Führungskanal geführt ist. Hierdurch ist ein definierter Verfahrweg des Klemmstücks erzielt. Weiterhin ist einem möglichen Verkippen des Klemmstücks innerhalb des nehmerseitigen Führungsarms verhindert.

In Ausgestaltung der Erfindung ist an dem Gehäuse ein Schieber angeordnet, der mit dem Spannteil verbunden ist und durch den das Spannteil innerhalb der Klemmbohrung des Klemmstücks bewegbar ist Hierdurch ist eine manuelle Steuerung des Einspannvorgangs durch den Bediener ermöglicht. Alternativ ist auch eine elektrische bzw. elektromechanische Betätigung des Schiebers möglich.

In weiterer Ausgestaltung der Erfindung ist der Schieber mit einem Mitnehmer verbunden, durch den die Zahnseide geführt ist, wobei der Mitnehmer derart ausgebildet ist, dass eine Mitnahme der Zahnseide nur in eine Schieberichtung des Schiebers erfolgt. Hierdurch ist eine Betätigung des Spannmittels unter gleichzeitigem Vorschub der Zahnseide erzielt, wodurch eine kontrollierte Durchführung der Zahnseide durch einen Zahnzwischenraum durch den Bediener mit anschließender Verspannung der Zahnseide ermöglicht ist.

Gegenstand der Erfindung ist weiterhin eine Zahnseide zum Einsatz in einer Vorrichtung der vorgenannten Art mit den Merkmalen des Patentanspruchs 15. Dadurch, dass an der Mantelfläche der Zahnseide eine Schuppenstruktur vorhanden ist, deren Schuppen alle in die selbe Flucht in einem spitzen Winkel nach außen gerichtet sind, ist - bei entsprechender Durchführung der Zahnseide durch die Durchgangsbohrung des Spannteils - bei Relativbewegung der Zahnseide in Richtung des geberseitigen Führungsarms, also in Spannrichtung, ein Verkrallen der Schuppen der Schuppenstruktur der Zahnseide mit den Schuppen der Schuppenstruktur des Spannteils erzielt, wodurch eine erhebliche Verbesserung der Halteeigenschaften des Spannteils bewirkt ist. Entgegen der Spannrichtung ist dabei weiterhin eine einfache Entnahme eines Zahnseideabschnitts nach dessen Abtrennung ermöglicht, da in dieser Richtung keiner Verkrallung der Schuppen der Schuppenkonturen von Zahnseide und Spannteil erfolgt und die Zahnseide mit ihrem Schuppenprofil einfach entlang des Schuppenprofils der Durchgangsöffnung des Spannteils gleiten kann.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

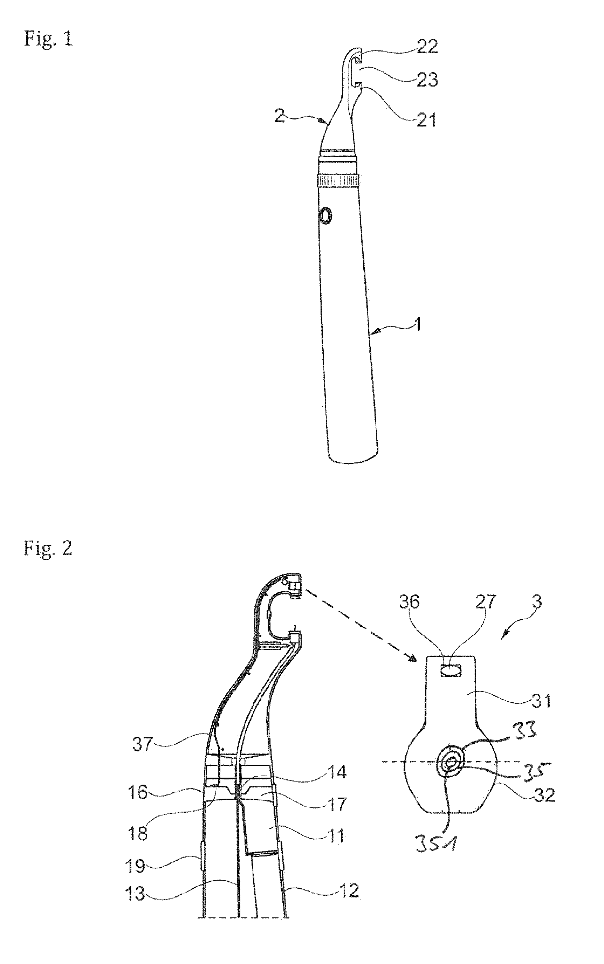

- Figur 1: die räumliche Darstellung einer Vorrichtung zur Reinigung von Zahnzwischenräumen;
- Figur 2: die schematische Darstellung der Vorrichtung aus Figur 1 vor Inbetriebnahme mit Detailansicht des Klemmstücks;

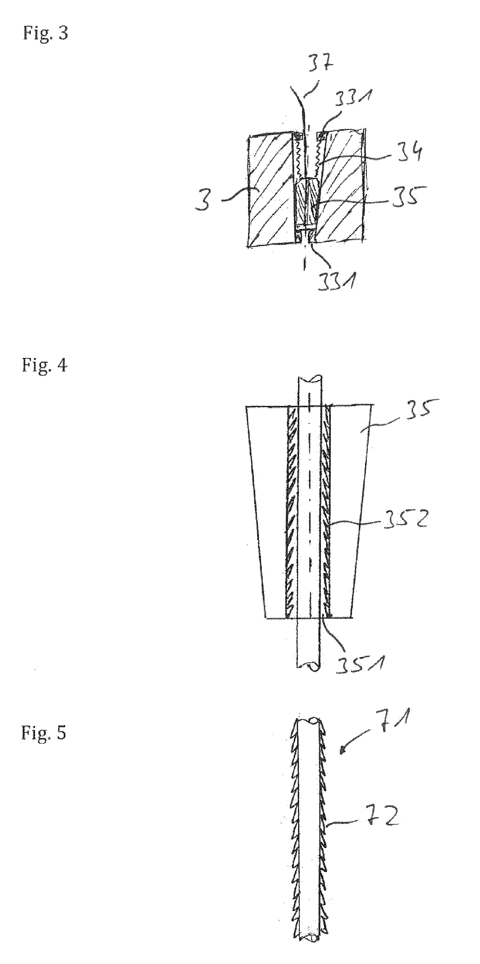

- Figur 3: die Detaildarstellung des Klemmstücks aus Figur 2 im Schnitt III-III;
- Figur 4: die Detaildarstellung des Spannteils des Klemmstücks aus Figur 3;
- Figur 5: die Detaildarstellung des von dem Spannteil aus Figur 3 aufgenommenen Zahnseidestücks;

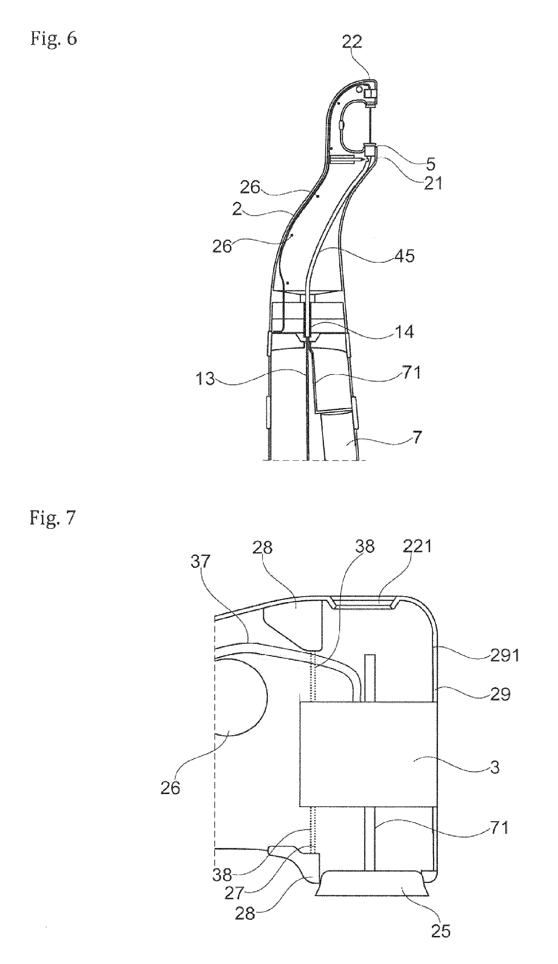

- Figur 6: die schematische Darstellung der Vorrichtung gemäß Figur 2 mit im Spannteil eingeführter Zahnseide;
- Figur 7: die Detaildarstellung des nehmerseitigen Führungsarms der Vorrichtung gemäß Figur 2 mit Spannteilanordnung;
- Figur 8: die Detaildarstellung der Führungsarme des Aufsatzes der Vorrichtung gemäß Figur 5 mit eingespannter Zahnseide;
- Figur 9: die Darstellung unterschiedlicher Bewegungspositionen des Führungsteils der Vorrichtung gemäß Figur 8 mit Zahnseideverlauf und
- Figur 10: eine schematische Skizzierung wesentlicher Funktionsbauteile der Vorrichtung aus Figur 1.

Die als Ausführungsbeispiel gewählte Vorrichtung zur Reinigung von Zahnzwischenräumen besteht im Wesentlichen aus einem Handstück 1, das mit einem Aufsatz 2 versehen ist, an dem zwei Führungsarme 21, 22 angeordnet sind, die zangenartig zueinander ausgebildet sind. Zwischen den Führungsarmen 21, 22 ist ein Zwischenraum 23 zur Aufnahme einer Zahnreihe gebildet. Der Aufsatz 2 ist auf dem Handstück 1 aufgesteckt und mittels einer lösbaren Rastverbindung mit dem Handstück 1 verbunden. Alternativ kann die lösbare Verbindung als Bajonettverbindung ausgebildet sein.

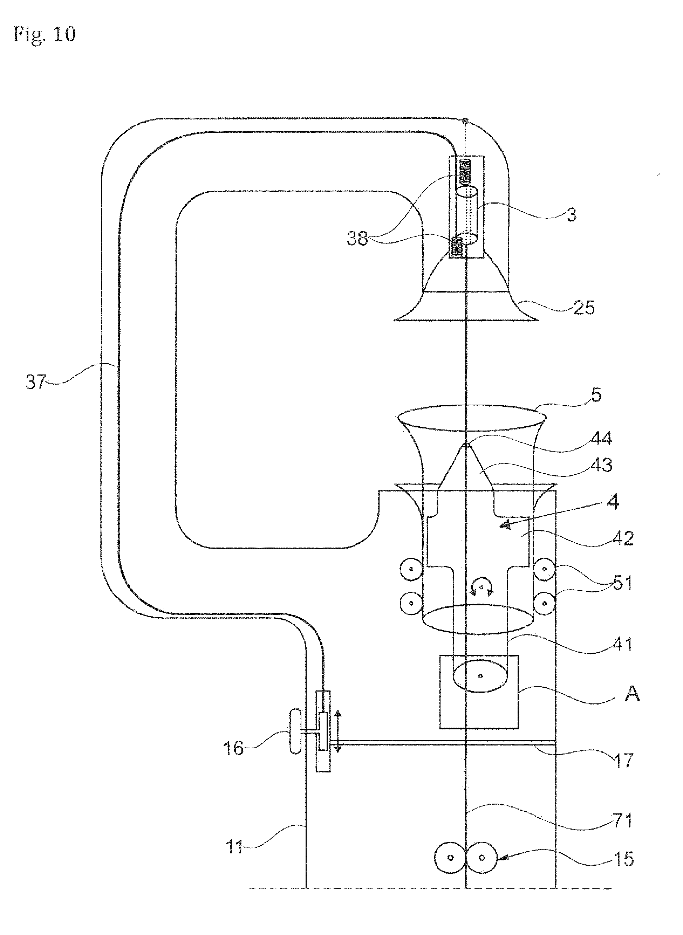

Das Handstück 1 weist ein im Wesentlichen zylindrisch ausgebildetes Gehäuse 11 auf, in dem eine Aufnahme 12 für einen Zahnseidespender 7 angeordnet ist. Weiterhin ist eine Antriebswelle 13 angeordnet, die mit einem - nicht dargestellten - ersten Antrieb verbunden ist. Endseitig der Antriebswelle 13 ist eine Kopplung 14 zur Aufnahme eines Schlauchstücks 45 zum Antrieb des Führungsteils 4 angeordnet. Die Kopplung 14 ist derart ausgebildet, dass eine Steckverbindung zwischen Kopplung 14 und Schlauchstück 45 beim Aufstecken des Aufsatzes 2 auf das Handstück 1 erfolgt. Zur Förderung der Zahnseide 71 des Zahnseidespenders 7 ist weiterhin ein Fördermodul 15 angeordnet, das in Figur 10 in Form von zwei gegenüberliegend angeordneten Rollen dargestellt ist, zwischen denen die Zahnseide 71 geführt ist. Das Fördermodul 15 ist derart eingerichtet, dass die Zahnseide 71 vorwärts sowie rückwärts transportiert werden kann.

Außen ist an dem Gehäuse 11 ein Schieber 16 angeordnet. Der Schieber 16 ist mit dem Riemen 37 des Spannteils 35 lösbar verbunden, der über Rollen 26 innerhalb des Aufsatzes 2 geführt ist. Der Schieber 16 ist zur lösbaren Verbindung mit dem Riemen 37 mit einer Aufnahme 18 versehen, in die der Riemen 37 eines Aufsatzes 2 lösbar einrastbar ist. Auch die lösbare Verbindung des Riemens 37 mit der Aufnahme 18 erfolgt beim Aufstecken des Aufsatzes 2 auf das Handstück 1.

Weiterhin ist der Schieber 16 mit einer Mitnehmerscheibe 17 verbunden, durch welche die Zahnseide 71 geführt ist. Die Mitnehmerscheibe 17 ist derart ausgebildet, dass eine Mitnahme der Zahnseide 71 nur in eine Schieberichtung erfolgt. Durch mehrmaliges Schieben des Schiebers 17 ist so eine schubweise Förderung der Zahnseide 71 durch einen Zahnzwischenraum ermöglicht.

Darüber hinaus ist an dem Gehäuse 11 ein Schalter 19 angeordnet, welcher mit einer - nicht dargestellten - Steuereinrichtung verbunden ist. Der Schalter 19 ist als Multifunktionsschalter ausgebildet und dient sowohl dem Ein- und Ausschalten der Vorrichtung, als auch der Aktivierung des Fördermoduls 15 sowie dem Starten des Reinigungsvorgangs.

Der Aufsatz 2 ist ebenfalls als Hohlkörper ausgebildet und weist an seinem dem Handstück 1 gegenüberliegenden Ende zwei zangenartig zueinander angeordnete Führungsarme 21, 22 auf, zwischen denen ein Zwischenraum 23 gebildet ist. Mittig ist zwischen den Führungsarmen 21, 22 ein elastisches Zahnauflagestück 24 angeordnet. Das Zahnauflagestück 24 dient als elastischer Puffer zwischen dem Aufsatz 2 und der Zahnkrone. Weiterhin ist an dem nehmerseitigen Führungsarm 22 ein trichterförmig ausgebildetes, elastisches Zahnanlagestück 25 angeordnet. Das Zahnanlagestück 25 dient der Anlage an eine Zahnreihe. Oberhalb des Zahnanlagestücks 25 ist in dem nehmerseitigen Führungsarm 22 eine Führungsschiene 27 angeordnet, die an ihren beiden Enden über ein Anschlagstück 28 mit dem Aufsatz 2 verbunden ist. Die Führungsschiene 27 dient der Aufnahme eines Klemmstücks 3, das auf der Führungsschiene 27 innerhalb des nehmerseitigen Führungsarms 22 des Aufsatzes verfahrbar ist. Dem Zahnanlagestück 25 gegenüberliegend ist weiterhin in dem geberseitigen Führungsarm 21 eine Bohrung 221 eingebracht. Die Bohrung 221 dient der Entnahme eines Zahnseidestücks nach dessen Verwendung.

Das Klemmstück 3 ist im Ausführungsbeispiel als Kunststoffteil ausgebildet. Es besteht im Wesentlichen aus einem quaderförmigen Führungsblock 31, an dem ein Zylinderteil 32 angeformt ist. Auf der Mittelachse des Zylinderteils 32 ist in dieses eine konisch in Richtung Zahnanlagestück 25 sich verjüngende Klemmbohrung 33 eingebracht, die an ihren beiden Enden jeweils einen ringförmig ausgebildeten, nach innen kragenden Anschlag 331 aufweist.

In den Führungsblock 31 ist ein Führungskanal 36 zur Aufnahme der Führungsschiene 27 des nehmerseitigen Führungsarms 22 eingebracht, durch den das Klemmstück 3 innerhalb des nehmerseitigen Führungsarm 22 geführt ist. Beidseitig des Führungskanals 36 ist auf der Führungsschiene 27 weiterhin ein Federelement 38 angeordnet, das im Ausführungsbeispiel jeweils als Schraubenfeder ausgebildet ist. Die Federelemente 38 sind derart dimensioniert, dass das Klemmstück 3 sich im Ruhezustand mittig auf dem Führungssteg 29 befindet.

In der konischen Klemmbohrung 33 des Klemmstücks 3 ist ein ebenfalls konisch ausgebildetes Spannteil 35 verschiebbar angeordnet, in das entlang seiner Mittelachse eine Durchgangsbohrung 351 eingebracht ist. Das Spannteil 35 ist im Ausführungsbeispiel aus Gummi hergestellt und derart dimensioniert, dass es an der engsten Stelle der konischen Klemmbohrung 33 an dem dort angeordneten Anschlag 331 anliegend komprimiert wird, sodass der Durchmesser der Durchgangsbohrung 351 reduziert ist. Die Innenmantelfläche der Durchgangsbohrung 351 ist mit einer Schuppenstruktur 352 versehen, die derart ausgebildet ist, dass die Schuppen dem geberseitigen Führungsarm entgegen gerichtet in einem spitzen Winkel an der Innenmantelfläche angestellt sind.

Das Spannteil 35 ist über Federelemente 34, die an dem der Bohrung 221 des nehmerseitigen Führungsarms 22 zugewandten Anschlag 331 anliegen, gegen den gegenüberliegenden Anschlag 331 vorgespannt, wo das Spannteil 35 durch den verminderten Durchmesser der Klemmbohrung 33 komprimiert ist. An dem Spannteil 35 ist ein Riemen 37 befestigt, der über Rollen 26 durch den Aufsatz 2 geführt und mit dem Schieber 16 des Handstücks 1 verbunden ist. Über den Riemen 37 ist das Spannteil 3 entlang der Klemmbohrung 33 des Klemmstücks 3 verfahrbar.

Wird das Spannteil 35 über den Schieber 16 innerhalb der Klemmbohrung 33 gegen die Federkraft der Federelemente 34 bewegt, so nehmen das Spannteil 35 sowie die in dieses eingebrachte Durchgangsbohrung 351 ihrem unkomprimierten Zustand an, wodurch die Durchgangsbohrung 351 einen erweiterten Innendurchmesser aufweist, wodurch eine Durchführung der Zahnseide durch die Durchgangbohrung 351 ermöglicht ist. Wird der Schieber 16 nicht mehr betätigt, so wird das Spannteil 35 über die Rückstellkräfte der Federelemente 34 in die Ausgangslage zurück bewegt, wodurch das Spannteil 35 wieder komprimiert wird, wodurch der Innendurchmesser der Durchgangsbohrung 351 durch die konisch zulaufende Klemmbohrung 33 verringert wird. Die Zahnseide 71 ist so in der Durchgangsbohrung 351 des Spannteils 35 eingeklemmt, wobei die Schuppen der Schuppenstruktur 352 der Durchgangsbohrung 351 winklig entgegen der Spannrichtung der Zahnseide 71 an dessen Mantelfläche anliegen. Im Ausführungsbeispiel weist die Zahnseide 71 an ihrer Mantelfläche eine Schuppenstruktur 71 auf, deren Schuppen in einem spitzen Winkel in entgegen der Ausrichtung der Schuppen der Schuppenstruktur 352 der Durchgangsbohrung 351 nach außen gerichtet sind, welche Schuppenstrukturen 352, 71 bei Zug miteinander verkeilt sind, wodurch eine zuverlässige Fixierung der Zahnseide 71 in der Durchgangsbohrung 351 des Spannteils 51 vorliegt.

In dem geberseitigen Führungsarm 21 ist ein Führungsteil 4 rotatorisch oszillierbar angeordnet. Das Führungsteil 4 ist als Kunststoffteil ausgeführt und besteht im Wesentlichen aus einem zylinderförmigen Schaft 41, an den sich ein durchmesservergrößerter Abschnitt 42 anschließt. Auf dem durchmesservergrößerten Abschnitt 42 ist exzentrisch zu dem Schaft 41 ein kegelförmiger Ansatz 43 angeformt, dessen Oberfläche mit einer Gummischicht versehen ist. Versetzt zur Mittelachse des Schafts 41 ist in das Führungsteil 4 eine Bohrung 44 eingebracht, die in der Spitze des exzentrisch angeordneten kegelförmigen Ansatzes 43 mündet. Der Schaft 41 des Führungsteils 4 ist unrund, bevorzugt als Vielkant ausgebildet und ist von einem Schlauchstück 45 aufgenommen, das endseitig mit einer - nicht dargestellten - korrespondierenden unrunden Aufnahme versehen ist. Das Schlauchstück 45 ist im Ausführungsbeispiel in Form eines schlauchartigen Metallgeflechts ausgebildet und ist an seinem dem Führungsteil 4 entgegen gesetzten Ende mit der Kopplung 14 der Antriebswelle 13 des Handstücks 1 verbunden.

Die Kopplung 14 weist einen - nicht dargestellten - Durchgang zur Durchführung der Zahnseide 71 auf, die durch das Schlauchstück 45 geführt ist und die Bohrung 44 des Führungsteils 4 durchdringt. Beabstandet zu dem Führungsteil 4 ist in das Schlauchstück 45 eine Aussparung 451 zum Durchtritt des Messers 61 einer in dem Aufsatz angeordneten Schneidvorrichtung 6 eingebracht. Der Antrieb des Führungsteils 4 umfassend das mit der Antriebswelle 13 verbundene Schlauchstück 45 sowie den mit der Antriebswelle 13 - nicht dargestellten - Antrieb ist in Figur 10 durch ein mit "A" gekennzeichnetes Quadrat symbolisch dargestellt.

Das Führungsteil 4 umgebend ist in dem geberseitigen Führungsarm 21 ein Distanzstück 5 angeordnet. Das Distanzstück 5 ist als Kunststoffteil ausgebildet und an seinem trichterförmigen, dem Zahnanlagestück 25 zugewandten Ende elastisch ausgebildet. Das Distanzstück 5 ist über einen zweiten Antrieb 51, der in Figur 10 in Form von angetriebenen Rollen dargestellt ist, entlang des Führungsteils 4 verfahrbar ausgebildet. Der Innendurchmesser des Distanzstücks 5 ist dabei geringfügig größer ausgebildet, als der Außendurchmesser des durchmesservergrößerten Abschnitts 42 des Führungsteils 4.

Die erfindungsgemäße Vorrichtung wird mit ihrem Aufsatz 2 derart in den Mundraum des Benutzers eingeführt, dass eine Zahnreihe in den Zwischenraum 23 des Aufsatzes 2 eingreift. Dabei liegt der Aufsatz mit seinem Zahnauflagestück 24 auf der Krone eines Zahnes auf. Das Führungsteil 4 wird sodann mit seinem kegelförmigen Ansatz 43 zwischen zwei Zähnen auf dem Zahnfleisch aufliegend positioniert. Durch Betätigung des Schiebers 16 wird über die Mitnehmerscheibe 17 die Zahnseide 71 abschnittsweise durch den Zahnzwischenraum geführt, wobei das Spannteil 35 innerhalb des Klemmstücks 3 entgegen der Vorspannkraft der Federelemente 34 in Richtung der Durchmesservergrößerung der konischen Klemmbohrung 33 bewegt wird, wodurch die Durchgangsöffnung 351 auf die zuvor beschriebene Art und Weise vergrößert wird. Die Zahnseide 71 wird durch die Durchgangsöffnung 351 des Spannteils 3 gefördert und - nach Beendigung der Betätigung des Schiebers 16 - auf die zuvor beschriebene Art und Weise durch Verringerung der Öffnungsweite der Durchgangsöffnung 351 in dem Spannteil 35 eingespannt, welches Spannteil 35 durch die Federkraft der Federelemente 34 in einen durchmesserverringerten Abschnitt der konischen Klemmbohrung 33 bewegt wird, wodurch es komprimiert wird, wodurch der Durchmesser der von der Zahnseide 71 durchdrungenen Durchgangsöffnung 351 verringert wird.

Anschließend wird das Distanzstück 5 in Richtung des Zahnanlagestücks 25 verfahren, wodurch die zu dem zu reinigenden Zahnzwischenraum benachbarten Zähne zwischen dem Zahnanlagestück 25 und dem Distanzstück 5 "eingespannt" werden. Hierdurch wird gleichzeitig das Führungsteil 4 mit seinem kegelförmigen Absatz 43 aus dem Zahnzwischenraum herausbewegt.

Durch einen Rückwärtsbetrieb des Fördermoduls 15 wird die Zahnseide 71 anschließend gespannt, derart, dass das Klemmstück 3 in Richtung des Führungsteils 4 bewegt wird. Durch die Spannung verhaken sich die Schuppen der Schuppenstruktur 352 mit den Schuppen der Schuppenstruktur 72 der Zahnseide 71.

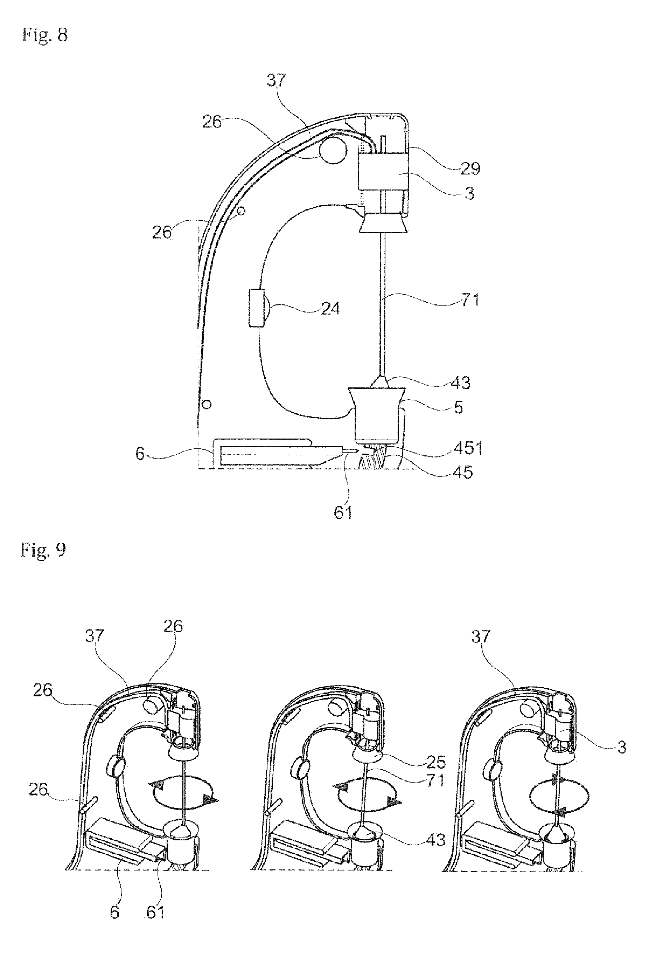

Das Führungsteil 4 wird nun durch die Antriebswelle 14 über das Schlauchstück 45 oszillierend rotiert, wobei jeweils nur eine anteilige Rotation von etwa 200 Grad erfolgt, bevor die Rotationsrichtung geändert wird. Hierdurch beschreibt die Zahnseide 71 am Durchtrittspunkt aus dem kegelförmigen Ansatz 43 des Führungsteils 4 oszillierend einen Teilkreisbogen. Der Bewegungsablauf der Zahnseide 71 ist in Figur 9 in unterschiedlichen Positionen dargestellt. Gleichzeitig wird die Zahnseide 71 über das Fördermodul 15 in eine Hin-und-her-Bewegung versetzt, wodurch die Zahnreinigung unterstützt wird. Das über die Führungsschiene 27 in dem nehmerseitigen Führungsarm 22 geführte und zwischen den Federelementen 38 gelagerte Klemmstück 3 folgt dabei der vertikalen Schwingungsbewegung der Zahnseide 71, wobei das Klemmstück 3 durch die Federelemente 38 nach jedem Zugvorgang wieder in Richtung Mittellage (Gleichgewichtszustand) zurückbewegt wird.

Nach Beendigung des Reinigungsvorgangs wird das Distanzstück 5 relativ zum Führungsteil 4 zurückbewegt, wonach die Vorrichtung unter Durchführung der Zahnseide 71 - wenn möglich - aus der Zahnlücke entnommen werden kann. Die Zahnseide kann jedoch auch über die Schneidvorrichtung 6 getrennt werden, wobei das Messer 61 durch die Aussparung 451 des Schlauchstücks 45 hindurch schneidet. Das abgetrennte Zahnseidestück kann nun durch die in dem nehmerseitigen Führungsarm 22 angeordnete Bohrung 221 entnommen werden. Hierbei gleiten die Schuppen der Schuppenstrukturen 352, 72 von Durchgangsbohrung 351 und Zahnseide 71 aneinander entlang; ein Verhaken der Schuppen findet aufgrund ihrer Ausrichtung nicht statt. Durch die Entnahme wird das Spannteil 35 über die Zahnseide entgegen der Vorspannkraft der Federelemente 34 innerhalb der konischen Klemmbohrung 33 des Klemmstücks 3 bewegt, wodurch der Durchmesser der Durchgangsbohrung 351 vergrößert wird, bis er die Zahnseide 71 freigibt.

## Patentansprüche

1. Vorrichtung zur Reinigung von Zahnzwischenräumen, umfassend ein Gehäuse zur Aufnahme eines Zahnseidespenders, zwei zangenartig zueinander ausgebildete Führungsarme, die einen Zwischenraum begrenzen, durch welchen die Zahnseide des Zahnseidespenders transportierbar ist sowie ein Fördermodul, mittels dessen die Zahnseide durch einen geberseitigen Führungsarm in Richtung des gegenüberliegend angeordneten nehmerseitigen Führungsarm förderbar ist, wobei in dem nehmerseitigen Führungsarm Greifmittel zur Entgegennahme und Fixierung der Zahnseide angeordnet sind, **dadurch gekennzeichnet, dass** die Greifmittel ein eine Durchgangsbohrung (351) aufweisendes, zumindest bereichsweise elastisches Spannteil (35) umfassen, das innerhalb einer unterschiedliche Innendurchmesser aufweisenden Klemmbohrung (33) eines Klemmstücks (3) verschiebbar angeordnet ist, durch welche Klemmbohrung (33) die Zahnseide (71) förderbar ist, wobei innerhalb der Durchgangsbohrung (351) des Spannteils (35) eine Anzahl von in Richtung der vertikalen Mittelachse der Durchgangsbohrung (351) gerichteter Klemmarme angeordnet sind.

2. Vorrichtung nach Anspruch 1, **dadurch gekennzeichnet, dass** die Klemmbohrung (33) in Richtung des geberseitigen Führungsarms (21) konisch zulaufend ausgebildet ist.

3. Vorrichtung nach Anspruch 1 oder 2, **dadurch gekennzeichnet, dass** die Klemmarme zumindest teilweise diametral gegenüberliegend der vertikalen Mittelachse der Durchgangsbohrung (351) des Spannteils (35) angeordnet sind.

4. Vorrichtung nach Anspruch 3, **dadurch gekennzeichnet, dass** die Klemmarme durch winklig angestellt Borsten gebildet sind.

5. Vorrichtung nach Anspruch 4, **dadurch gekennzeichnet, dass** die bürstenförmig angeordneten Borsten in einem spitzen Winkel dem geberseitigen Führungsarm (21) entgegengerichtet an der Innenmantelfläche der Durchgangsbohrung (351) angestellt sind.

6. Vorrichtung nach Anspruch 3, **dadurch gekennzeichnet, dass** die Klemmarme durch dem geberseitigen Führungsarm (21) entgegengerichtet in einem spitzen Winkel angestellte Schuppen einer an der Innenmantelfläche der Durchgangsbohrung (351) angeformten Schuppenstruktur (352) gebildet sind.

7. Vorrichtung nach Anspruch 6, **dadurch gekennzeichnet, dass** die mit der Schuppenstruktur (352) versehene Innenmantelfläche aus einem Material mit hohem Reibwert, insbesondere aus Kunststoff oder Gummi hergestellt ist.

8. Vorrichtung nach einem der vorgenannten Ansprüche, **dadurch gekennzeichnet, dass** die Klemmbohrung (33) an wenigstens einem Ende, bevorzugt an beiden Enden einen Anschlag (331) für das Spannteil (35) aufweist.

9. Vorrichtung nach Anspruch 8, **dadurch gekennzeichnet, dass** das Spannteil (35) mit wenigstens einem Federelement (34) verbunden ist, durch welches das Spannteil (35) in Richtung des geringsten Innendurchmessers der Klemmbohrung (33) gegen einen endseitig der Klemmbohrung (33) angeordneten Anschlag (331) vorgespannt ist.

10. Vorrichtung nach einem der vorgenannten Ansprüche, **dadurch gekennzeichnet, dass** beidseitig des Klemmstücks (3) wenigstens ein Federelement (38) angeordnet ist, wobei die Federelemente (38) derart ausgebildet sind, dass sich das Klemmstück (3) in Ruhestellung etwa mittig des nehmerseitigen Führungsarms (22) befindet.

11. Vorrichtung nach Anspruch 9 oder 10, **dadurch gekennzeichnet, dass** wenigstens ein Federelement (38) durch eine Schraubenfeder gebildet ist.

12. Vorrichtung nach einem der vorgenannten Ansprüche, **dadurch gekennzeichnet, dass** an dem Gehäuse (11) ein Schieber (16) angeordnet ist, der mit dem Spannteil (35) verbunden ist und durch den das Spannteil (35) innerhalb der Klemmbohrung des Klemmstücks bewegbar ist.

13. Vorrichtung nach Anspruch 12, **dadurch gekennzeichnet, dass** der Schieber (16) mit einem Mitnehmer (17) verbunden ist, durch den die Zahnseide (71) geführt ist, wobei der Mitnehmer (17) derart ausgebildet ist, dass eine Mitnahme der Zahnseide (17) nur in eine Schieberichtung des Schiebers (16) erfolgt.

14. Vorrichtung nach einem der Ansprüche 5 bis 13, **dadurch gekennzeichnet, dass** die Zahnseide (71) an ihrer Mantelfläche eine Schuppenstruktur (72) aufweist, deren Schuppen entgegen den Schuppen der Schuppenstruktur (352) des Spannteils (35) in einem spitzen Winkel nach außen gerichtet sind.

15. Zahnseide zum Einsatz in einer Vorrichtung nach einem der Ansprüche 5 bis 13, **dadurch gekennzeichnet, dass** an der Mantelfläche der Zahnseide (71) eine Schuppenstruktur (72) vorhanden ist, deren Schuppen alle in derselben Flucht in einem spitzen Winkel nach außen gerichtet sind.
